# EUROPÄISCHE PATENTSCHRIFT

(11) **EP 0 348 853 B1**
(45) Veröffentlichungstag und Bekanntmachung des Hinweises auf die Patenterteilung: **19.05.1993**
(21) Anmeldenummer: 89111549.5
(22) Anmeldetag: 24.06.1989
(51) Int. Cl.: E04B 2/88, F16B 2/18

(54) **Spannvorrichtung**
Tightening device
Tendeur

(30) Priorität: 28.06.1988 DE 8808243 U
(43) Veröffentlichungstag der Anmeldung: 03.01.1990
(60) Teilanmeldung: 91118981.9
(73) Patentinhaber: Houben, Dietmar, D-42281 Wuppertal (DE)
(72) Erfinder: Houben, Dietmar, D-42281 Wuppertal (DE)
(74) Vertreter: Selting, Günther, Dipl.-Ing.

(56) Entgegenhaltungen:
- AU-A- 456 630
- DE-A- 2 949 436
- GB-A- 118 106
- US-A- 3 234 702
- US-A- 3 356 395

## Beschreibung

Die Erfindung betrifft eine Spannvorrichtung zur Verbindung eines Halteteiles mit einem Montageteil, bei der ein zwischen zwei einander gegenüberliegenden Flächen angeordneter Exzenterstab als drehbarer Klemmkörper beide Teile gegen Widerlager verspannt.

Bei einer bekannten derartigen Spannvorrichtung (DE-A-29 49 436) ist das Halteteil als C-Profil-Schiene ausgebildet und das Montageteil besteht aus einer Platte, die zentral in das C-Profil eingelegt und mit Hilfe des Exzenterstabes in einer längslaufenden Nut festgespannt ist. Wenn die Breite des Montageteiles der Breite des Hohlraumes des Halteteiles etwa entspricht - was zur Vermeidung von Querverschiebungen beider Teile relativ zueinander günstig ist, muß das Montageteil von einem Ende her axial in das Halteteil eingeschoben werden. Dies ist bei mehrere Meter langen Halteteilen, wie sie z.B. bei Dachkonstruktionen benutzt werden, umständlich und in manchen Fällen aus Platzgründen gar nicht durchführbar. Um auch in solchen Fällen die an sich günstige Spannvorrichtung mit Exzenterstab benutzen zu können, wurde die Breite des Montageteiles in bezug auf den C-Profil-Hohlraum des Halteteiles so gering bemessen, daß das Montageteil durch Schrägstellung quer in das C-Profil eingesetzt werden konnte. Da das Montageteil dabei nur geringfügig breiter als die Längsöffnung des C-Profils des Halteteiles ist, besteht die Gefahr, daß durch Montagefehler Erschütterungen oder Deformationen das Montageteil aus dem C-Profil des Halteteiles herausrutscht und die Zusammenspannung beider Teile wenigstens teilweise unwirksam wird mit nachteiligen Folgen für die Gesamtkonstruktion.

Außerdem ist es bekannt, zur Verbindung von waagerechten und senkrechten Rahmenteilen mit Kastenprofil, die zusammengesteckt sind, eine Spannvorrichtung zu benutzen, die einen an dem einen Rahmenteil drehbar gelagerten Winkelhebel mit einem Nockenteil aufweisen (US-A-3 356 395). In Sperrstellung drückt der Nockenteil des Winkelhebels zwei ihm gegenüberliegende benachbarte Flächen der beiden Rahmenteile gegeneinander. An diesen beiden Flächen befinden sich zusammengreifende Rippenund Komplementärprofilierungen, die als Gleitsicherung dienen. Die bekannte Vorrichtung funktioniert nur dann, wenn der den Winkelhebel tragende Rahmenteil Kastenprofil hat, so daß die dem Winkelhebel gegenüberliegende Rahmenteilfläche geschlossen ist. Zur gegenseitigen Verspannung von Plattenteilen, die lose aufeinanderliegen, ist diese bekannte Vorrichtung nicht geeignet.

Der Erfindung liegt die Aufgabe zugrunde, eine Spannvorrichtung der eingangs erwähnten Art so zu verbessern, daß eine erleichterte Montage der Teile und ihr zuverlässiger Zusammenhalt gewährleistet sind.

Diese Aufgabe wird erfindungsgemäß durch die Merkmale des Patentanspruches 1 gelöst.

Eine solche Querschnittsprofilierung des Montageteiles und des Halteteiles ist besonders vorteilhaft, weil beide Teile ohne besondere Manipulationen parallel zueinander seitlich zusammengeschoben werden können und nach dem Verspannen mit Hilfe des gegen die Flächen der J-förmigen Teile andrückenden Exzenterstabes die nach entgegengesetzten Seiten weisenden umgebogenen Ränder der beiden Teile die Widerlager bilden. Der Zusammengriff der Rippenformationen und der Komplementärformationen verhindert ein seitliches Herausrutschen oder Verschieben von Teilen relativ zueinander. Die Rippenformationen und Komplementärformationen können durch Aufkantungen der Ränder der Teile gebildet sein. Der Exzenterstab ist vorteilhafterweise in eine längslaufende Nut in der Mitte des einen Teiles eingelagert und greift gegen den Mittelbereich des anderen Teiles an, so daß die Spannkraft gegen beide Seiten gleichmäßig wirksam ist.

Vorteilhafterweise wird ein bekannter Exzenterstab verwendet, der ein Kopfstück aufweist, das im gespannten Zustand kurz hinter dem Totpunkt der Drehbewegung gegen eine gegenüberliegende Fläche anschlägt. Das Kopfstück kann mit Hilfe eines an diesem befestigten Armes betätigt werden oder es kann durch Ansetzen eines Imbusschlüssels in einen Innenmehrkant in seiner oberen Stirnseite gedreht werden.

Bei einer Ausgestaltung der Erfindung (Anspruch 2) ist vorgesehen, daß der gerade Rand des einen Teiles von dem umgebogenen Rand des anderen Teiles umgriffen ist und daß der gerade Rand des einen Teiles auf der seinem umgebogenen Rand abgewandten Fläche eine federnde Leiste aufweist, die mit der Rippenformation an dem umgebogenen Rand des anderen Teiles zusammengreift. Die Rippenformation kann aus einer einzigen Rippe bestehen, die von der Kante der federnden Leiste hintergriffen ist. Eine solche Konstruktion wird ebenfalls durch seitliches Zusammenschieben der Teile montiert, wobei die Federleiste ein Anklipsen ermöglicht und zusätzlich zu der Klemmkraft des Exzenterstabes eine Haltekraft auf die miteinander verbundenen Teile derart ausübt, daß das eine Teil seitlich zu dem anderen versetzt an diesem hängend befestigbar ist.

Ferner ist gemäß der Erfindung vorgesehen (Anspruch 3), daß das eine Teil eine Platte aufweist, von der nach der gleichen Seite zwei Leisten mit gleichsinnig gerichteten L-Profilschenkeln ausgehen, wobei der L-Profilschenkel der ersten Leiste den von dem geraden Rand des anderen Teiles hintergriffenen umgebogenen Rand und der L-Profilschenkel der zweiten Leiste den von dem umgebogenen Rand des anderen Teiles hintergriffenen geraden längsverlaufenden Rand des J-Form-Querschittes des einen Teiles bilden und daß mindestens einer der L-Profilschenkel eine Rippenformation aufweist, die mit der Komplementärformation des anderen Teiles zusammengreift. Diese Ausbildung ist besonders günstig für Fassadenprofile, wobei das eine J-förmige Teil ein Fassadenhalter sein kann, der seitlich in das Halteteil mit den beiden L-Profilschenkeln eingeschoben wird, bis sein gerader Rand und sein umgebogener Rand hinter die L-Profilschenkel greifen. Sodann wird der Klemmkörper in eine vorzugsweise an dem Fassadenhalter angeordnete Nut eingesetzt und bis zur Einnahme seiner Spannstellung gedreht, in der die Längsachse seines Exzenters auf den einander gegenüberliegenden Flächen von Montageteil und Halteteil etwa senkrecht steht. Die Montage ist schnell und einfach. Der Fassadenhalter wird von hinten in die verschiedenen Fassadenprofile eingesetzt, seitlich verschoben und mit dem Klemmkörper fixiert. An den Fassaden-Festpunkten werden Klemmkörper mit Schneidrillen verwandt, während an den Gleitpunkten Klemmkörper ohne Schneidrillen eingesetzt werden.

Variationen durch geeignete Kombinationen der beanspruchten Profilformen sind im Rahmen der Erfindung realisierbar.

In der Zeichnung sind Ausführungsbeispiele der Erfindung schematisch dargestellt. Es zeigt:
Fig. 1 ein Montageteil und ein Halteteil mit J-Profil in Stirnansicht,
Fig. 2 eine perspektivische Ansicht des Zusammenbaus einer Figur 1 ähnlichen Konstruktion,
Fig. 3 einen Schnitt durch eine Beleuchtungskastenhalterung, bei der das Spannvorrichtungs-Prinzip nach Figuren 1 und 2 verwendet ist,
Fig. 4 eine isometrische Darstellung eines Teiles der Anordnung nach Figur 3,
Fig. 5 eine Stirnansicht einer weiteren Ausgestaltung des Prinzips der Beispiele der Figuren 1 und 2,
Fig. 6 und 7 zwei Montagestadien einer weiteren abgewandelten Spannvorrichtung, und
Fig. 8 ein Beispiel einer besonderen Gestaltung der Rippen- und Komplementärformationen, die wahlweise die Formationen der anderen Ausführungsformen ersetzen können.

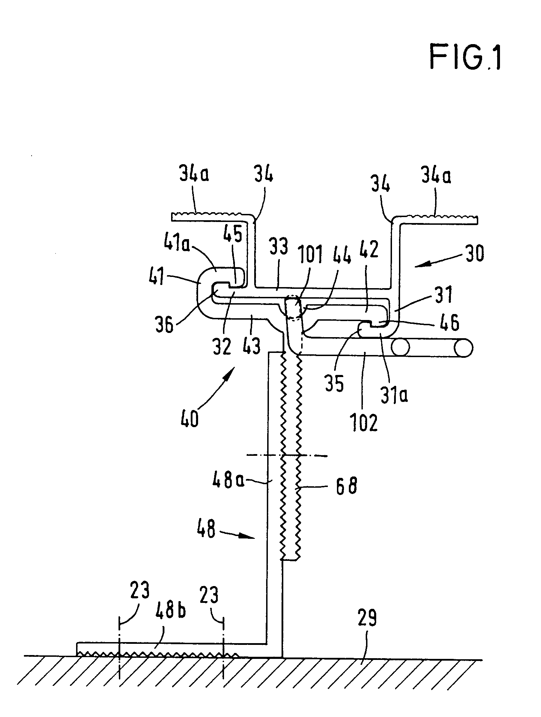

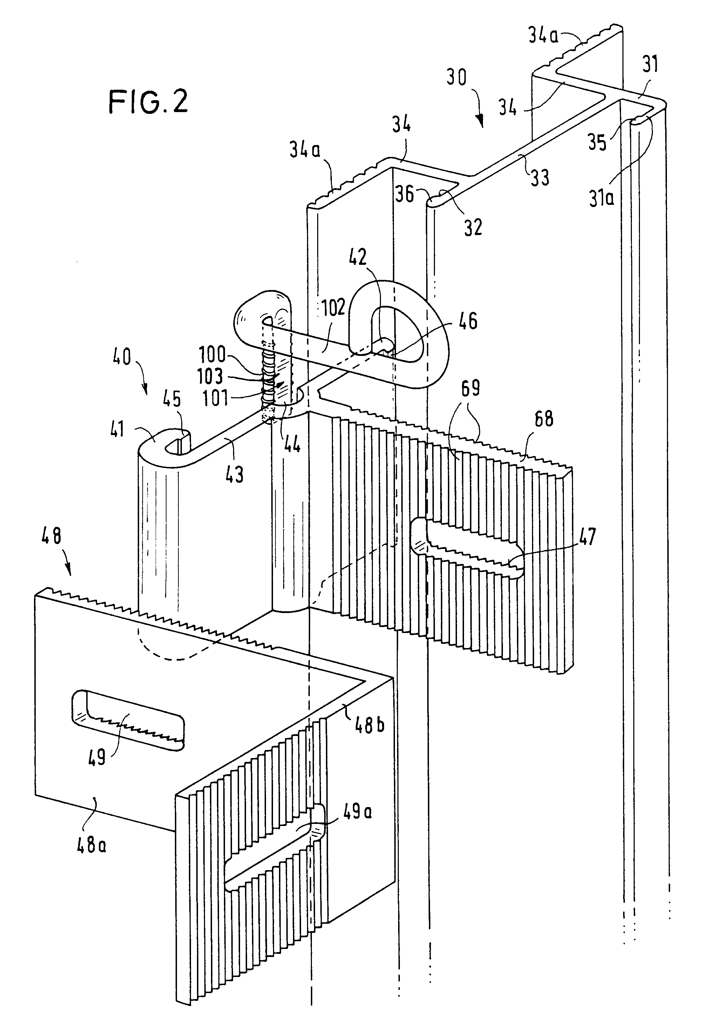

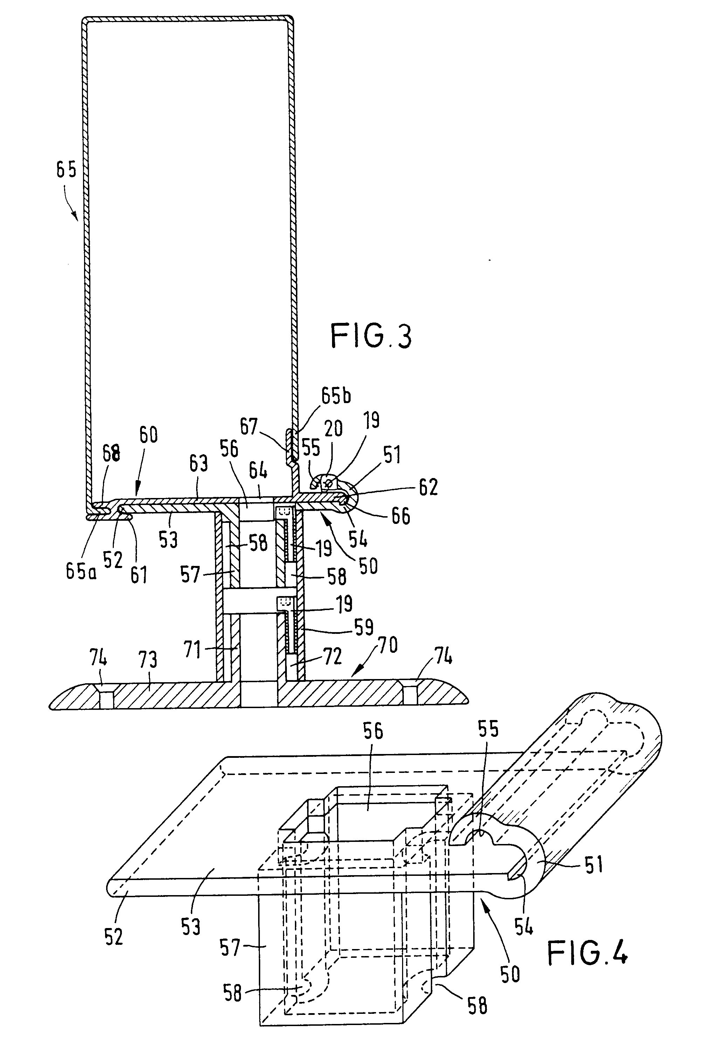

Figuren 1 und 2 veranschaulichen eine Fassadenunterkonstruktion, die aus Aluminium gefertigt sein kann. In diesem Falle ist ein Montageteil 30 an einer langen Schiene vorgesehen und im Querschnitt J-förmig mit einer Platte 33 gestaltet, die einen längslaufenden umgebogenen Rand 31 und gegenüber einen längslaufenden geraden Rand 32 aufweist. Von der Platte 33 des J-Profils gehen nach oben zwei Winkelschienen 34 ab, die entgegengesetzt gerichtete Befestigungsschenkel 34a zur Befestigung von Fassadenplatten oder dergleichen aufweisen. Der L-förmig umgebogene Rand 31, dessen freier Schenkel 31a mit Abstand zu der ebenen Fläche der Platte 33 parallel angeordnet ist, weist an seinem Ende eine einwärts gerichtete Aufkantung auf, die sich über die ganze Länge des Montageteiles 30 erstreckt und eine vorstehende Rippe 35 bildet. Eine längsverlaufende Rippe 36 befindet sich auch an dem geraden Rand 32. Sie weist in die gleiche Richtung wie die Rippe 35, nämlich gegen die beiden Befestigungsschenkel 34a.

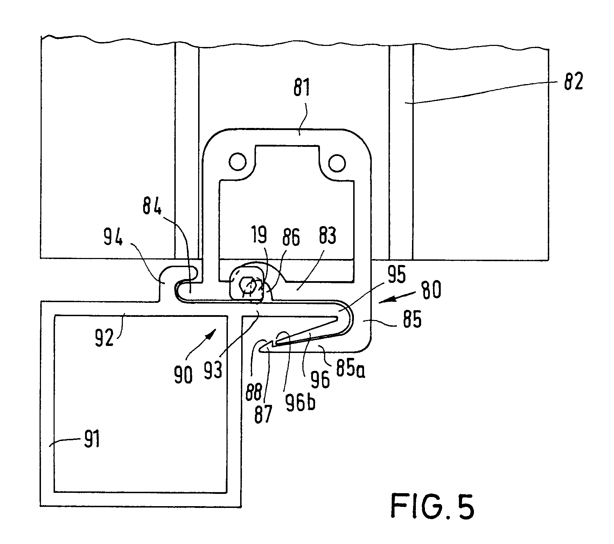

Mit dem Montageteil 30 ist ein Halteteil 40 verspannbar. Auch dieses hat im Querschnitt J-Form mit einem umgebogenen Rand 41 und einem geraden Rand 42 sowie einer einwärts gerichteten Rippe 45 am Ende des umgebogenen Randes 41 und einer längsverlaufenden Rippe 46 am Ende des geraden Randes 42. Die Rippen 45 und 46 sind gleichsinnig gerichtet. Das Halteteil 40 ist als axial kurzes Metallstück ausgebildet (Figur 2) und in der Mitte seiner Platte 43 ist eine längsverlaufende etwa halbkreisförmige Nut 44 ausgebildet, die den Stab eines Klemmkörpers 101 aufnimmt, der als Exzenterstab 103 mit zur Drehachse nicht radialsymmetrischer Umfangsfläche gestaltet ist. Der Exzenterstab 103 des Klemmkörpers 101 kann im Querschnitt oval oder rund mit zwei abgeplatteten gegenüberliegenden Seiten sein. An seiner Umfangsfläche ist er im Bereich großen Durchmessers mit querverlaufenden parallelen Schneidkanten 100 versehen, die in der Darstellung nach Figur 2 bei dem Klemmkörper 101 erkennbar sind, das an seinem oberen Ende einen etwa rechtwinklig von dem Exzenterstab 103 abstehenden Handgriff 102 aufweist. Der Handgriff 102 verläuft senkrecht zu der Achse größten Durchmessers des Exzenterstabes 103 des Klemmkörpers 101. Auf der Rückseite der Nut 44 ist an die Platte 43 eine senkrecht gerichtete Lasche 68 angeformt, die mit gezahnten Seitenflächen 69 und mit einem zu dem Verlauf der Zahnungen quergerichteten Schlitzloch 47 versehen ist. Das Halteteil 40 wird einfach seitlich so auf das Montageteil 30 aufgeschoben, daß der gerade Rand 42 in den umgebogenen Rand 31 des Montageteiles 30 eingreift und der umgebogene Rand 41 den geraden Rand 32 des Montageteiles 30 aufnimmt. Dabei hintergreifen die Rippen 45 und 46 des Halteteiles 40 die Rippen 35 und 36 des Montageteiles 30. Auf diese Weise wird eine seitliche Verschiebungssicherung erzielt. Anschließend wird der Klemmkörper 101 lose in die Nut 44 eingesteckt, wobei der größere Durchmesser des unrunden Exzenterstabes 103 parallel zu der Platte 33 des Halteteiles 40 und der Platte 43 des Montageteiles 30 ausgerichtet ist. Zum Spannen wird der Handgriff 102 so verschwenkt, daß er gegen den Schenkel 31a des Montageteiles 30 anliegt, wodurch der große Durchmesser des Exzenterstabes 103 quergestellt wird und der Exzenterstab 103 mit seinem größeren Durchmesser gegen den Grund der Nut 44 und gegen die Unterfläche der Platte 33 drückt, so daß der gerade Rand 32 und der umgebogene Rand 31 der Platte 33 gegen den Schenkel 41a bzw. den geraden Rand 42 der Platte 43 gepreßt werden und der Zusammengriff der Rippen 36, 45 und 35, 46 gesichert wird. Dabei graben sich die scharfkantigen Schneidkanten 100 des Exzenterstabes 103 in den Grund der Nut 44 und die Fläche der oberen Platte 33 ein. Es wird auf diese Weise eine feste und sichere Verspannung des Montageteiles 30 an dem Halteteil 40 und eine Sicherung gegen Längs- und Querverschiebung erreicht. Der Klemmkörper 101 wird - bis auf die Abwandlung des Betätigungsstückes gemäß Figuren 3 und 5 - bei allen geschilderten Ausführungsformen in gleicher Weise verwendet.

Ein Winkelstück 48, dessen Schenkel 48a und 48b entsprechend den Seitenflächen 69 gezahnte Seitenflächen und je ein Schlitzloch 49, 49a aufweisen, ist mit seinem einen Schenkel 48b mit Hilfe von durch das Schlitzloch 49a gesteckten Befestigungsbolzen 23 am Mauerwerk 29 oder dergleichen befestigt (Fig. 1). Sodann wird die Lasche 68 an dem Schenkel 48a mittels durch die Schlitzlöcher 47, 49 hindurchgesteckter Bolzen befestigt, um das Halteteil 40 zu fixieren. Anschließend wird wie vorher beschrieben das Montageteil 30 mit dem Halteteil 40 zusammengesetzt und verspannt.

Bei dem Beispiel der Figur 3 handelt es sich um eine Beleuchtungskastenhalterung mit J-förmigem Halteteil 50 und J-förmigem Montageteil 60. Das Halteteil 50 besteht aus einer geraden Platte 53, deren einer Rand 52 gerade verläuft und deren gegenüberliegender anderer Rand 51 spazierstockartig umgebogen ist. Der Rand 51 ist an dem Übergang zu der ebenen Platte 53 mit einer längslaufenden Stufe 54 versehen und im Bereich seines freien Endes, das mit Abstand über der Oberfläche der Platte 53 vorgesehen ist, befindet sich in der Nähe der Stufe 54 eine halbkreisförmige Nut 55 zur Aufnahme des Klemmkörpers 19. Die Platte 53 ist außerhalb ihres Zentrums mit einer kreuzförmigen Öffnung 56 versehen (Figur 4), an die sich ein Sockelkasten 57 nach unten anschließt, der in zwei einander gegenüberliegenden Wänden längsverlaufende halbkreisförmige Rillen 58 aufweist, die nach außen offen sind. Der Sockelkasten 57 wird mit Hilfe eines in eine Rille 58 von oben her eingesteckten Klemmkörpers 19 mit einem auf den Sockelkasten 57 aufgeschobenen geraden Rohr 59 verspannt, so daß das Halteteil 50 und das Rohr 59 eine koaxiale Einheit bilden. Das untere offene Ende des Rohres 59 wird auf einen nach oben gerichteten Stutzen 71 einer Konsole 70 aufgesteckt. Die Querschnittsprofilierung des Stutzens 71 entspricht derjenigen des Sockelkastens 57. In eine nach außen offene halbkreisförmige Rille 72 ist ebenfalls ein Klemmkörper 19 zur Verspannung des Stutzens 71 mit dem Rohr 59 eingesetzt. Die Konsole 70 weist eine großflächige Bodenplatte 73 auf, die kreisförmig oder eckig sein kann und die mit Hilfe von Befestigungslöchern 74 eine Verbindung mit einem beliebigen Untergrund ermöglicht. Bei der Montage des geschilderten Aufbaus wird zunächst das Rohr 59 auf den Stutzen 71 aufgesteckt und mit diesem verbunden und danach erfolgt die Zusammenspannung des Halteteiles 50 mit dem Rohr 59.

Gegen die Oberfläche der Platte 53 des Halteteiles 50 ist das Montageteil 60 angesetzt. Dieses besteht ebenfalls aus einer ebenen Platte 63, deren Abmessungen der Platte 53 des Halteteiles 50 etwa entsprechen und auch sie hat einen umgebogenen Rand 61 sowie einen geraden Rand 62. Der gerade Rand 62 ist an seinem Ende mit einer längslaufenden nach unten weisenden Rippe 66 versehen, die hinter die Stufe 54 des umgebogenen Randes 51 des Halteteiles 50 passend eingreift. Gegen die Oberseite des geraden Randes 62 des Montageteiles 60 kommt der Klemmkörper 19 zur Einwirkung. Eine Öffnung 64 der Platte 63 fluchtet mit der Öffnung 56 des Sockelkastens 57 und dient zum Durchlaß von elektrischen Installationen, die durch den Sockelkasten 57 und den Stutzen 71 nach unten geführt sind. Der umgebogene Rand 61 des Montageteiles 60 umgreift den geraden Rand 52 des Halteteiles 50 passend. An der nach außen gerichteten Kante des umgebogenen Randes 61 befindet sich eine Gabelschiene 68, deren Rille etwa in der Flucht der Platte 53 liegt. Die Gabelschiene 68 nimmt eine Abwinkelung 65a eines transparenten Kastenaufbaus 65 auf, dessen anderes Ende 65b mit einem nach oben ragenden Arm 67 des Montageteiles 60 z.B. verschraubt ist. Die Platten 53 und 63 liegen dicht aufeinander und der Spielraum zur Verstellung des exzentrischen Klemmteiles 19 befindet sich zwischen der Oberseite des geraden Randes 62 des Montageteiles 60 und der Innenfläche des umgebogenen Randes 51. Auf diese Weise ist der Kastenaufbau 65 stabil und stoßfest auf der Unterkonstruktion gelagert.

Das Beispiel nach Figur 5 zeigt eine Unterkonstruktion, die zur Befestigung von Sichtschutzlamellen oder Markisen geeignet ist. In Figur 5 ist eine Anordnung von Sichtschutzlamellen 82 an Autobahnen veranschaulicht. Ein Halteteil 80 mit J-förmigem Querschnitt ist hierbei an der Unterseite einer Hohlprofilschiene 81 ausgebildet, an der die Sichtschutzlamellen 82 befestigt sind. Bei diesem Halteteil 80 bildet die untere Wand der Hohlprofilschiene 81 die ebene Platte 83 mit einem geraden Rand 84 und einem gegenüberliegenden umgebogenen Rand 85. In der Nähe des geraden Randes 84 ist die Platte 83 mit der halbkreisförmigen Nut 86 zur Aufnahme des Klemmkörpers 19 versehen. Der umgebogene Rand 85 läuft in einen verlängerten Endteil 85a aus, dessen Innenfläche zu der Unterfläche der Wand 83 nach außen divergiert. An der äußeren Kante des Endteiles 85a befindet sich ein einwärts gerichteter Vorsprung mit einer von außen nach innen ansteigenden Schrägfläche 88, die an einer Abstufung 87 endet. Das Endteil 85a des umgebogenen Randes 85 wird in Richtung der Abstufung 87 dünner, so daß sich eine gewisse Federwirkung quer zur Platte 83 ergibt.

Das J-Profil des Montageteiles 90 ist an der Oberwand 92 eines Balkens 91 mit quadratischem Querschnitt ausgebildet. Die Oberwand 92 ist in gleicher Ebene durch eine Platte 93 des Montageteiles 90 verlängert. Die Wand 93 weist im Bereich der Oberwand 92 einen nach oben gerichteten umgebogenen Rand 94 auf und an ihrem geraden Rand 95 ist eine federnde Leiste 96 angeformt, die nach unten gerichtet und dem umgebogenen Rand 94 zugewandt ist. Die federnde Leiste 96 verjüngt sich in Querrichtung stark, wodurch sie keilförmigen Querschnitt erhält. Zur Montage dieser Anordnung wird der Balken 91 seitlich so gegen das Halteteil 80 geführt, daß die federnde Leiste 96 über die Schrägfläche 88 des Vorsprunges des umgebogenen Randes 85 des Halteteiles 80 gleitet und mit ihrer Kante 96b die Abstufung 87 einrastend hintergreift, wenn der umgebogene Rand 94 des Montageteiles 90 den geraden Rand 84 des Halteteiles 80 umfaßt. Die Arretierung wird zusätzlich zu dem Anklipsen des verschiebbaren Montageteiles 90 durch den Klemmkörper 19 und dessen Spannwirkung erzielt.

Obwohl bei den Beispielen der Figuren 1 bis 5 jeweils gerade Halte- und Montageteile dargestellt und beschrieben sind, erlaubt das Spann- und Sicherungsprinzip mit Arretierungsrippe auch gebogene Ausführungen, weil die seitliche Zusammenführbarkeit der Teile von ihrem Verlauf unabhängig ist. In jedem Falle sind jedoch zwei Widerlager aktiv, um die Arretierung zu gewährleisten.

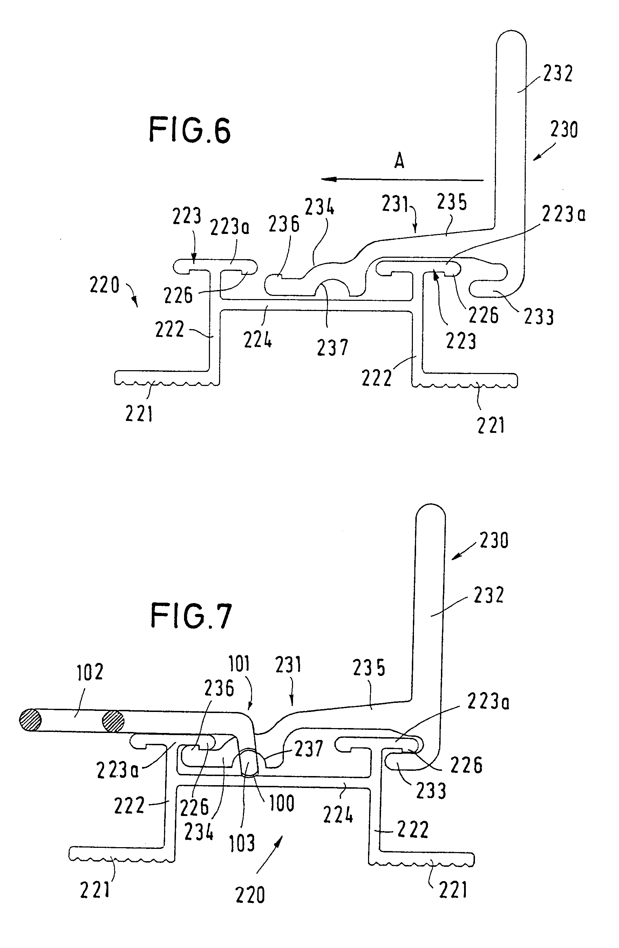

Figuren 6 und 7 zeigen die Befestigung eines als Fassadenhalter benutzbaren Montageteiles 230 an einem Halteteil 220, das ein Fassadenprofil ist. Das Montageteil 230 besteht aus einem im Querschnitt L-förmigen Strangprofil mit zwei zueinander rechtwinkligen Leistenteilen 231 und 232, dessen einer Leistenteil 231 generell J-förmig ist und einen geraden Rand 234 sowie einen umgebogenen Rand 233 aufweist. Der umgebogene Rand 233 bildet einen Haken. Der gerade Rand 234 geht von einem streifenförmigen Zwischenteil 235 umlenkungsfrei aus und ist an seinem äußersten Ende mit einer längsverlaufenden Rippe 236 versehen, die entgegengesetzt zu dem Haken des umgebogenen Randes 233 gerichtet ist. Im Bereich zwischen dem Zwischenteil 235 und der Rippe 236 befindet sich auf der Unterseite eine halbkreisförmige Nut 237 zur Aufnahme eines Exzenterstabes 103, der - wie in Figur 3 gezeigt - mit Schneidrillen 100 versehen sein kann. Mit Hilfe eines Handgriffes 102 läßt sich der Klemmkörper 101 in seine Spannstellung drehen.

Das Halteteil 220 ist im Querschnitt als H-Profil mit entgegengesetzt gerichteten Befestigungsschenkeln 221 zur Befestigung von Fassadenplatten oder dergleichen gestaltet. Am anderen Ende der die Befestigungsschenkel 221 aufweisenden parallelen Stege 222, die durch eine Platte 224 miteinander verbunden sind, befindet sich je eine Leiste 223, die parallel zu den Befestigungsschenkeln 221 ausgerichtet sind und mit dem zugehörigen Steg 222 ein T-Profil bilden. Nur der eine Schenkel 223a jedes T-Profils dient jeweils der Befestigung des Montageteiles 230. Der andere Schenkel ist verfügbar, wenn das Montageteil 230 von der anderen Seite her gegen das Halteteil 220 angesetzt werden soll, um eine Befestigung des Halteteiles 220 an einer versetzten Befestigungsfläche zu ermöglichen. Jeder Schenkel 223a ist auf seiner der Platte 224 zugewandten Unterseite am Rand mit einer Rippe 226 versehen, die eine Rille begrenzt. Das Montageteil 230 wird seitlich so in das Halteteil 220 hineingeschoben, wie der Pfeil A in Figur 6 zeigt. Wenn der Haken des umgebogenen Randes 233 den Schenkel 223a unterfaßt und die Rippe 236 die Rippe 226 hintergreift, wird der Klemmkörper 101 in die Nut 237 eingesetzt und in die in Figur 7 gezeigte Sperrposition gedreht, in der der Handgriff 102 gegen die Leiste 223 anliegt. In diesem Zustand ist der Fassadenhalter durch die Spannvorrichtung gesichert. Bei dem gezeichneten Beispiel ist der umgebogene Rand 233 des Montageteiles 230 von einer Rippe frei. Erforderlichenfalls kann auch der Haken mit einer nach innen gerichteten Rippe versehen sein, die die Rippe 226 des Schenkels 223a der Leiste 223 hintergreift.

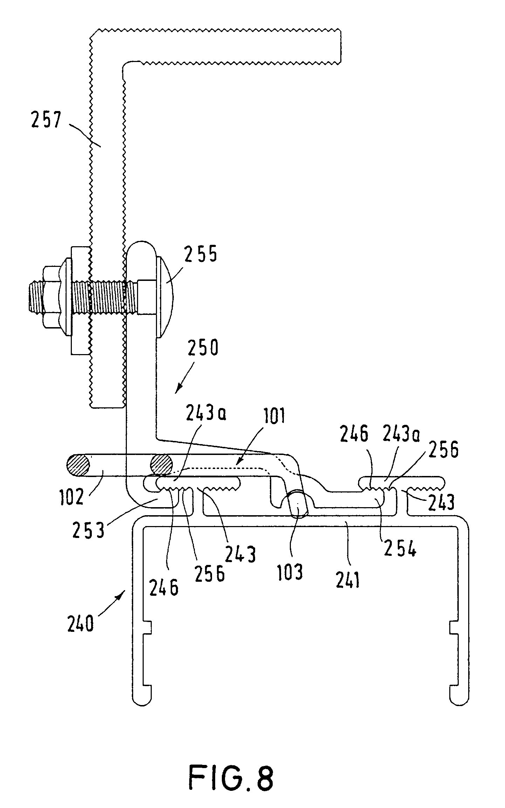

Figur 8 veranschaulicht bei einem Fassadenprofil eine Spannvorrichtung, bei der das Montageteil 250 und das Halteteil 240 ähnlich ausgebildet sind wie bei den Figuren 6, 7. Ein wesentlicher Unterschied, der auch auf alle anderen Beispiele gemäß Figuren 1 bis 5 Anwendung finden kann, besteht jedoch darin, daß anstatt der einander hintergreifenden Einzelabstufungen von Montageteil und Halteteil die Rippenformation des einen Teiles und die Komplementärformation des anderen Teiles aus gezahnten Flächenprofilierungen 246 und 256 bestehen. Dies hat den wesentlichen Vorteil, daß die Endstellung von Halteteil 240 und Montageteil 250 nicht von vornherein unveränderbar definiert ist, sondern sich in Abhängigkeit von dem Anwendungszweck verändern läßt, ohne daß die Arretierung gegen Querverschiebung im Verriegelungszustand der Spannvorrichtung hierdurch beeinträchtigt wird.

Bei diesem Beispiel ist das Halteteil 240 als im Querschnitt U-förmige Aluminiumkassette ausgebildet, von deren Grundsteg 241 zwei T-förmige Leisten 243 nach der gleichen Seite auswärts gerichtet sind. Nur der Schenkel 243a ist jeweils als Widerlager für den geraden Rand 256 und den umgebogenen Rand 253 des Halteteiles 250 wirksam, wenn der Klemmkörper 101 seine Sperrposition eingenommen hat. Das Montageteil 250 ist mittels eines Bolzens 255 an einem Winkelstück 257 befestigt, das der Anbringung der Anordnung an einer Mauer oder dergleichen dient.

## Patentansprüche

1. Spannvorrichtung zur Verbindung eines Halteteiles (40) mit einem Montageteil (30), bei der ein zwischen zwei einander gegenüberliegenden Flächen angeordneter Exzenterstab als drehbarer Klemmkörper (101) beide Teile (30,40) gegen Widerlager verspannt,
**dadurch gekennzeichnet,** daß das Montageteil (30;60;90;230;250) und das Halteteil (40;50;80;220;240) im Querschnitt J-Form mit einem umgebogenen (31,41;51,61;94,85;233,223a;253,243a) und einem geraden längsverlaufenden Rand (32,42;52,62;95,84;223,234;254,243a) haben, daß der gerade Rand (32,42;52,62;95,84;223,234;254,243a) des einen Teiles von dem umgebogenen Rand (31,41;51,61;94,85; 233,223a;253,243a) des anderen Teiles umgriffen ist und daß der gerade Rand (32,42;52,62;95,84;223,234;254,243a) wenigstens des einen Teiles eine zu dem stabförmigen Klemmkörper (101) parallele Rippenformation (36,46;66,87;226;246) aufweist, die mit einer Komplementärformation (35,45;54,96b;236;256) am umgebogenen Rand (31,41;51,61;94,85;233,223a;253,243a) des anderen Teiles zusammengreift.

2. Spannvorrichtung nach Anspruch 1,
**dadurch gekennzeichnet,** daß der gerade Rand (95) des einen Teiles (90) auf der seinem umgebogenen Rand (94) abgewandten Fläche eine federnde Leiste (96) aufweist, die mit der Rippenformation (87) an dem umgebogenen Rand (85) des anderen Teiles (80) zusammengreift.

3. Spannvorrichtung nach Anspruch 1,
**dadurch gekennzeichnet,** daß das eine Teil (220;240) eine Platte (224;241) aufweist, von der nach der gleichen Seite zwei Leisten (223;243) mit gleichsinnig gerichteten L-Profilschenkeln (223a; 243a) ausgehen, wobei der L-Profilschenkel (223a;243a) der ersten Leiste (223;243) den von dem geraden Rand (234) des anderen Teiles (230;250) hintergriffenen umgebogenen Rand und der L-Profilschenkel (223a;243a) der Zweiten Leiste (223;243) den von dem umgebogenen Rand (233) des anderen Teiles (230;250) hintergriffenen geraden längsverlaufenden Rand des J-Form-Querschnittes des einen Teiles (220;240) bilden
und daß mindestens einer der L-Profilschenkel (223a; 243a) eine Rippenformation (226;246) aufweist, die mit der Komplementärformation (236;256) des anderen Teiles (230;250) zusammengreift.

4. Spannvorrichtung nach Anspruch 3,
**dadurch gekennzeichnet,** daß jeder L-Profilschenkel (223a;243a) Teil des Quersteges eines T-Profils ist.

5. Spannvorrichtung nach einem der Ansprüche 1 bis 4,
**dadurch gekennzeichnet,** daß der Klemmkörper (101) zwischen den Enden gegenüberliegender Flächen des Montageteiles (30;90;230;250) und des Halteteiles (40;80;220;240) angeordnet ist.

6. Spannvorrichtung nach einem der Ansprüche 1 bis 5,
**dadurch gekennzeichnet,** daß die Rippenformation aus einer Rippe (35,36;66;96b;226) gebildet ist und daß die Komplementärformation eine Kante einer komplementären Abstufung (45,46;54;87;236) aufweist.

7. Spannvorrichtung nach einem der Ansprüche 1 bis 5,
**dadurch gekennzeichnet,** daß die Rippenformation und die Komplementärformation als zusammenpassende gezahnte Flächenprofilierungen (246; 256) ausgebildet sind.

8. Spannvorrichtung nach Anspruch 1,
**dadurch gekennzeichnet,** daß der Klemmkörper (19) zwischen dem umgebogenen Rand (51) des einen Teiles (50) und der gegenüberliegenden Fläche des geraden Randes (62) des anderen Teiles (60) angeordnet ist.

## Claims

1. A tightening device for connecting a holding member (40) to a mounting member (30), wherein an eccentric rod configured as turnable clamping body (101) arranged between two opposing surfaces chucks both members (30,40) against abutments,
**characterized in that**
said mounting member (30;60;90;230;250) and said holding member (40;50;80;220;240) have a J-shaped cross-section with a bent (31,41;51,61;94,85;233,233a;253,243a) and a straight longitudinal edge (32,42;52,62;95,84;223,234;254,243a), that said straight edge (32,42;52,62;95,84;223,234;254,243a) of the one member is embraced by said bent edge (31,41;51,61;94,85;233,223a;253,243a) of said other member, and that said straight edge (32,42;52,62;95,84;223,234;254,243a) of at least the one member comprises a rib formation (36,46;66,87;226;246) being parallel to said rod-shaped clamping body (101) and engaging with a complementary formation (35,45;54,96b;236;256) at the bent edge (31,41;51,61;94,85;233,223a;253,243a) of said other member.

2. The tightening device according to claim 1,
**characterized in that**
said straight edge (95) of said one member (90) comprises a resilient strip (96) on the surface facing away from said bent edge (94) thereof, which strip engages with said rib formation (87) at said bent portion (85) of said other member (80).

3. The tightening device according to claim 1,
**characterized in that**
said one member (220;240) comprises a plate (224;241) from which two strips (223;243) having L-section legs (223a;243a) extending in the same direction extend to the same side, said L-section leg (223a;243a) of said first strip (223;243) forming said bent edge behind which said straight edge (234) of said other member (230;250) engages, and said L-section leg (223a;243a) of said second strip (223;243) forming said straight longitudinally extending edge of said J-shaped cross-section of said other member (220;240), behind which edge said bent edge (233) of said other member (230;250) engages, and
that at least one of said L-section legs (223a;243a) comprises a rib formation (226;246) engaging with said complementary formation (236;256) of said other member (230;250).

4. The tightening device according to claim 3,
**characterized in that**
each L-section leg (223a;243a) is a part of the transverse web of a T-section.

5. The tightening device according to one of claims 1 to 4,
**characterized in that**
said clamping body (101) is arranged between the ends of opposite surfaces of said mounting member (30;90;230;250) and said holding member (40;80;220;240).

6. The tightening device according to one of claims 1 to 5,
**characterized in that**
said rib formation is formed of a rib (35,36;66;96b;226) and that said complementary formation comprises an edge having a complementary step (45,46;54;87;236).

7. The tightening device according to one of claims 1 to 5,
**characterized in that**
said rib formation and said complementary formation are configured as matching toothed surface profiling (246;256).

8. The tightening device according to claim 1,
**characterized in that**
said clamping body (19) is arranged between said bent edge (51) of said one member (50) and the opposite surface of said straight edge (62) of said other member (60).

## Revendications

1. Dispositif de fixation pour relier un élément de maintien (40) à un élément de montage (30), dans lequel une tige excentrée, disposée entre deux surfaces en vis-à-vis, presse, en tant que corps de blocage (101) rotatif, les deux éléments (30, 40) contre des butées,
caractérisé en ce que l'élément de montage (30 ; 60 ; 90 ; 230 ; 250) et l'élément de maintien (40 ; 50 ; 80 ; 220 ; 240) ont une section transversale en forme de J avec un bord recourbé (31, 41 ; 51, 61 ; 94, 85 ; 233, 223a ; 253, 243a) et un bord longitudinal droit (32, 42 ; 52, 62 ; 95, 84 ; 223, 234 ; 254, 243a), en ce que le bord droit (32, 42 ; 52, 62 ; 95, 84 ; 223, 234 ; 254, 243a) d'un élément est entouré par le bord recourbé (31, 41 ; 51, 61 ; 94, 85 ; 233, 223a ; 253, 243a) de l'autre élément, et en ce que le bord droit (32, 42 ; 52, 62 ; 95, 84 ; 223, 234 ; 254, 243a) d'au moins un élément présente une formation de nervure (36, 46 ; 66, 87 ; 226 ; 246) parallèle au corps de blocage (101) en forme de tige, et qui vient en prise avec une formation complémentaire (35, 45 ; 54, 96b ; 236 ; 256) sur le bord recourbé (31, 41 ; 51, 61 ; 94, 85 ; 233, 223a ; 253, 243a) de l'autre élément.

2. Dispositif de fixation selon la revendication 1, caractérisé en ce que le bord droit (95) d'un élément (90) présente sur la surface opposée à son bord recourbé (94) une lame faisant ressort (96) qui vient en contact avec la formation de nervure (87) sur le bord recourbé (85) de l'autre élément (80).

3. Dispositif de fixation selon la revendication 1, caractérisé en ce qu'un élément (220 ; 240) présente une plaque (224 ; 241) de laquelle partent du même côté deux barres (223 ; 243) avec des ailes profilées en L (223a ; 243a) dirigées dans le même sens, l'aile profilée en L (223a ; 243a) de la première barre (223 ; 243) constituant le bord recourbé saisi par derrière par le bord droit (234) de l'autre élément (230 ; 250), et l'aile profilée en L (223a ; 243a) de la seconde barre (223 ; 243) constituant le bord longitudinal droit de l'élément (220 ; 240) à section transversale en forme de J, qui est saisi par derrière par le bord recourbé (233) de l'autre élément (230 ; 250), et en ce qu'au moins l'une des ailes profilées en L (223a ; 243a) présente une formation de nervure (226 ; 246), qui vient en prise avec la formation complémentaire (236 ; 256) de l'autre élément (230 ; 250).

4. Dispositif de fixation selon la revendication 3, caractérisé en ce que chaque aile profilée en L (223a ; 243a) est une partie de l'âme transversale d'un profilé en T.

5. Dispositif de fixation selon l'une quelconque des revendications 1 à 4, caractérisé en ce que le corps de blocage (101) est disposé entre les extrémités de surfaces opposées de l'élément de montage (30 ; 90 ; 230 ; 250) et de l'élément de maintien (40 ; 80 ; 220 ; 240).

6. Dispositif de fixation selon l'une quelconque des revendications 1 à 5, caractérisé en ce que la formation en nervure est constituée par une nervure (35, 36 ; 66 ; 96b ; 226) et en ce que la formation complémentaire présente une arête d'un gradin complémentaire (45, 46 ; 54 ; 87 ; 236).

7. Dispositif de fixation selon l'une quelconque des revendications 1 à 5, caractérisé en ce que la formation en nervure et la formation complémentaire sont réalisées sous la forme de profits de surface dentés (246 ; 256) se correspondant.

8. Dispositif de fixation selon la revendication 1, caractérisé en ce que le corps de blocage (19) est disposé entre le bord recourbé (51) d'un élément (50) et la surface opposée du bord droit (62) de l'autre élément (60).
